# EUROPEAN PATENT APPLICATION

(11) **EP 3 546 728 A1**
(43) Date of publication of application: **02.10.2019**
(21) Application number: 19163823.8
(22) Date of filing: 19.03.2019
(51) Int. Cl.: F02D 13/02, F02D 41/00

(54) **CONTROL DEVICE FOR ENGINE**

(30) Priority: 26.03.2018 JP 2018058272
(71) Applicant: Mitsubishi Jidosha Kogyo Kabushiki Kaisha, Tokyo 108-8410 (JP)
(72) Inventor: ITANO, Ryosuke, Tokyo, 108-8410 (JP); MIYATA, Toshiyuki, Tokyo, 108-8410 (JP); TODA, Hitoshi, Tokyo, 108-8410 (JP)
(74) Representative: Vossius & Partner Patentanwälte Rechtsanwälte mbB

(57) **Abstract**

Under a normal pressure environment on a flat land, a control device for an engine controls a close timing for an exhaust valve 10 based on characteristics of an Ec target close phase angle including a charging efficiency Ec as a factor. Furthermore, under a low pressure environment at high altitude, the control device for the engine performs advance angle limitation mainly in a medium load region using an Ev target close phase angle including a volume efficiency Ev as a factor, and performs retard angle limitation mainly in a high load region using a retard angle limitation amount corresponding to an atmospheric pressure Pa. Thus, for example, in a load region E between the medium load region and the high load region, an increase in intake and exhaust overlap amount resulting from the advance angle limitation based on the Ev target close phase angle is inhibited by retard angle limitation based on the retard angle limitation amount. This reduces the overlap amount, inhibiting intake blow-by cause by a reduced exhaust pressure of the engine 1 at high altitude.

## Description

### BACKGROUND OF THE INVENTION

### Field of the Invention

The present invention relates to a control device for an engine, and in particular, to a control device preventing intake blow-by to provide a sufficient amount of air under a low pressure environment at high altitude.

### Description of the Related Art

Under a low pressure environment at high altitude, reduced air density causes a reduction in substantial amount of air taken into cylinders, leading to reduced engine output. This disadvantageously prevents a vehicle from accelerating appropriately in response to pressing of an accelerator, thus degrading drivability. Furthermore, in this case, when a driver presses the accelerator more than necessary, soot resulting from an excessive amount of fuel injected is disadvantageously deposited at an intake port and the like.

To inhibit such reduced engine output and soot deposition at high altitude, for example, a technique in Japanese Patent Laid-Open No. 2017-25770 has been proposed. The technique controllably changes and increases an intake and exhaust overlap amount when the engine is in a high-load and low-rotation-speed region under a low pressure environment at high altitude. This allows appropriate engine output to be achieved and to prevent soot deposition.

However, appropriate engine output is not reliably provided by a simple increase in intake and exhaust overlap amount as in the technique in Japanese Patent Laid-Open No. 2017-25770. Furthermore, insufficient engine output unavoidably urges the driver to press the accelerator more than necessary. This disadvantageously precludes prevention of soot deposition resulting from an excessive amount of fuel injected.

### SUMMARY OF THE INVENTION

In view of these problems, an object of the present invention is to provide a control device for an engine that is capable of inhibiting intake blow-by under a low pressure environment at high altitude and providing a sufficient amount of air to inhibit a decrease in engine output.

To accomplish the object, an aspect of the present invention provides a control device for an engine including a variable valve timing mechanism capable of changing an open and close timing for at least one of an intake valve and an exhaust valve to adjust an intake and exhaust overlap amount, the control device including detecting means for detecting an atmospheric pressure, first calculating means for calculating a target torque of the engine, increasing means for calculating the intake and exhaust overlap amount based on the target torque calculated by the first calculating means and increasing the overlap amount under a low pressure environment compared to the overlap amount under a normal pressure environment based on the atmospheric pressure detected by the detecting means, second calculating means for calculating an increase limitation amount for limiting an increase in the overlap amount under the low pressure environment based on the atmospheric pressure detected by the detecting means, limiting means for limiting an increase in the overlap amount calculated by the increasing means, based on the increase limitation amount calculated by the second calculating means, and driving control means for controllably driving the variable valve timing mechanism to achieve the overlap amount resulting from the limitation by the limiting means.

The control device for the engine configured as described above calculates the intake and exhaust overlap amount based on the target torque and increases the overlap amount under the low pressure environment compared to the overlap amount under the normal pressure environment based on the atmospheric pressure, thus providing a sufficient amount of air taken into cylinders. Then, an increase in the overlap amount under the low pressure environment is limited based on the increase limitation amount calculated based on the atmospheric pressure. This reduces the overlap amount to inhibit intake blow-by and enables provision of a sufficient amount of air taken into the cylinders.

In another aspect, preferably, the variable valve timing mechanism is capable of changing an open timing for the intake valve, the second calculating means calculates, as the increase limitation amount, an advance angle limitation amount for the open timing for the intake valve such that the open timing is retarded as the atmospheric pressure detected by the detecting means decreases, and the limiting means limits advancement of the open timing for the intake valve based on the advance angle limitation amount calculated by the second calculating means.

The control device for the engine configured as described above calculates, as the increase limitation amount, the advance angle limitation amount for the open timing for the intake valve such that the open timing is retarded as the atmospheric pressure decreases, and limits advancement of the open timing for the intake valve based on the advance angle limitation amount. This limits an increase in intake and exhaust overlap amount.

In yet another aspect, preferably, the variable valve timing mechanism is capable of changing a close timing for the exhaust valve, the second calculating means calculates, as the increase limitation amount, a retard angle limitation amount for the close timing for the exhaust valve such that the close timing is advanced as the atmospheric pressure detected by the detecting means decreases, and the limiting means limits retardation of the close timing for the exhaust valve based on the retard angle limitation amount calculated by the second calculating means.

The control device for the engine configured as described above calculates, as the increase limitation amount, the retard angle limitation amount for the close timing for the exhaust valve such that the close timing is advanced as the atmospheric pressure decreases, and limits retardation of the close timing for the exhaust valve based on the retard angle limitation amount. This limits an increase in intake and exhaust overlap amount.

In still another aspect, preferably, the increasing means includes a first calculating unit calculating a charging efficiency from the target torque calculated by the first calculating means, a second calculating unit calculating a volume efficiency from the charging efficiency and the atmospheric pressure detected by the detecting means, and a first setting unit setting one of the open timing for the intake valve based on the charging efficiency calculated by the first calculating unit and the open timing for the intake valve based on the volume efficiency calculated by the second calculating unit, as the open timing for the intake valve for which the advance angle is limited based on the advance angle limitation amount.

The control device for the engine configured as described above sets, as the open timing for the intake valve, one of the open timing for the intake valve based on the charging efficiency and the open timing for the intake valve based on the volume efficiency.

In further another aspect, preferably, the increasing means includes a first calculating unit calculating a charging efficiency from the target torque calculated by the first calculating means, a second calculating unit calculating a volume efficiency from the charging efficiency and the atmospheric pressure detected by the detecting means, and a second setting unit setting one of the close timing for the exhaust valve based on the charging efficiency calculated by the first calculating unit and the close timing for the exhaust valve based on the volume efficiency calculated by the second calculating unit, as the close timing for the exhaust valve for which the retard angle is limited based on the retard angle limitation amount.

The control device for the engine configured as described above sets, as the close timing for the exhaust valve, one of the close timing for the exhaust valve based on the charging efficiency and the close timing for the exhaust valve based on the volume efficiency.

In further another aspect, preferably, the engine includes supercharging means.

In the control device for the engine configured as described above, supercharging by the supercharging means increases an intake manifold pressure and is thus likely to cause intake blow-by, but even in this case, intended advantageous effects can be produced.

As described above, the control device for the engine according to the aspects of the present invention is capable of inhibiting intake blow-by under a low pressure environment at high altitude and providing a sufficient amount of air to inhibit a decrease in engine output.

### BRIEF DESCRIPTION OF THE DRAWINGS

FIG. 1 is a diagram illustrating a general configuration of an engine to which a control device of the present invention is applied;
FIG. 2 is a control block diagram of the ECU configured to calculate an intake open timing;
FIG. 3 is a control block diagram of the ECU configured to calculate an exhaust close timing;
FIG. 4 is a diagram illustrating a control map used to calculate an advance angle limitation amount for an intake valve based on an atmospheric pressure;
FIG. 5 is a diagram illustrating a control map used to calculate a retard angle limitation amount for an exhaust valve based on the atmospheric pressure;
FIG. 6 is a flowchart illustrating an intake open timing control routine executed by the ECU;
FIG. 7 is a flowchart illustrating an exhaust close timing control routine executed by the ECU;
FIG. 8 is a characteristic diagram illustrating that the intake open timing is limited; and
FIG. 9 is a characteristic diagram illustrating that the exhaust close timing is limited.

### DETAILED DESCRIPTION OF THE PREFERRED EMBODIMENT

An embodiment will be described in which the present invention is embodied in a control device for a supercharged gasoline engine (hereinafter referred to as an engine).

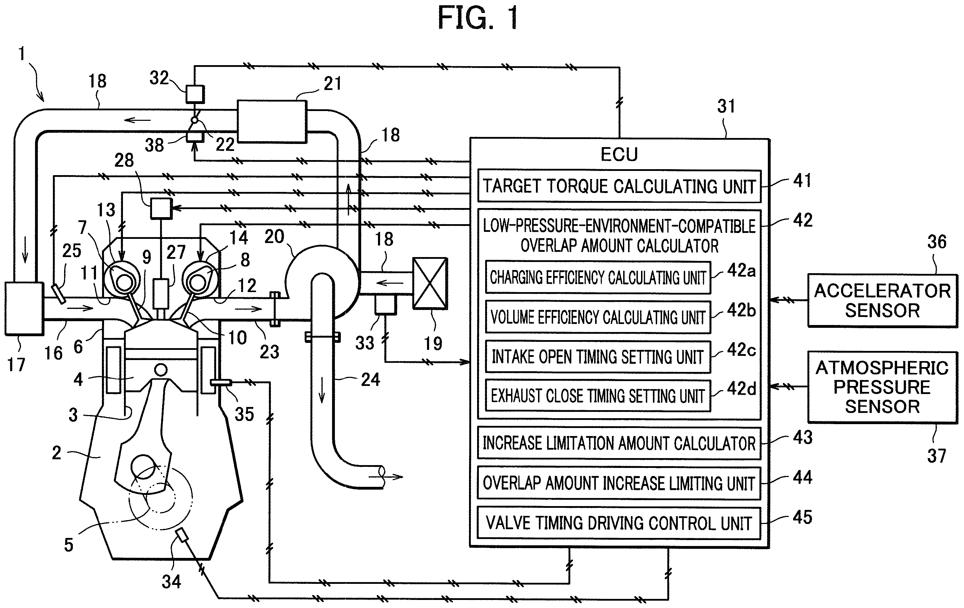

FIG. 1 is a diagram illustrating a general configuration of the engine to which the control device of the present invention is applied. The engine is mounted in a non-illustrated vehicle as a traveling power source. Pistons 4 are each disposed in a corresponding one of cylinders 3 formed in a cylinder block 2 of an engine 1. Each piston 4 slides through the cylinder 3 according to rotation of a crankshaft 5.

Rotation of the crankshaft 5 is transmitted to an intake camshaft 7 and an exhaust camshaft 8 provided on the cylinder head 6. The camshafts 7 and 8 are rotationally driven in synchronism with the crankshaft 5. An intake valve 9 is driven according to rotation of the intake camshaft 7 to open or close an intake port 11 at a predetermined timing. An exhaust valve 10 is driven according to rotation of the exhaust camshaft 8 to open or close an exhaust port 12 at a predetermined timing. Variable Valve Timing mechanisms (VVT mechanisms) 13, 14 are respectively connected to the intake and exhaust camshafts 7, 8. The VVT mechanisms 13, 14 consequently optionally change phases of the intake and exhaust camshafts 7, 8 with respect to the crankshaft 5 and thus change open and close timings for the intake valve 9 and the exhaust valve 10. This enables an intake and exhaust overlap amount to be adjusted.

A common surge tank 17 is connected to intake ports 11 of the cylinders via an intake manifold 16. A lower end of an intake passage 18 is connected to the surge tank 17. The intake passage 18 is provided with an air cleaner 19, a compressor of a turbocharger 20 (supercharging means), an intercooler 21, and a throttle valve 22 arranged in this order from an upstream side. Furthermore, an upper end of an exhaust passage 24 is connected to exhaust ports 12 of the cylinders via an exhaust manifold 23. The exhaust passage 24 is provided with a turbine of the turbocharger 20 and a catalyst device and a muffler that are not illustrated.

The intake manifold 16 is provided with injectors 25 corresponding to the respective cylinders. Each of the injectors 25 is supplied with fuel (gasoline) by a non-illustrated fuel pump. Ignition plugs 27 are each disposed in the corresponding cylinder of the engine 1 to face the inside of the cylinder. Each ignition plug 27 is ignited by driving of an igniter 28.

During operation of the engine 1, intake air introduced into the intake passage 18 from the air cleaner 19 is pressurized by the compressor of the turbocharger 20. The pressurized air is cooled by the intercooler 21. A flow rate of the cooled air is then adjusted by the throttle valve 22. The intake air further passes through the surge tank 17 and is distributed to the cylinders through the intake manifold 16. The intake air is mixed with the fuel injected from the injector 25 while being introduced into the cylinder of the engine 1 in conjunction with opening of the intake valve 9. In the cylinder, the mixed air is ignited by the ignition plug 27 and combusted. A resultant combustion pressure causes the crankshaft 5 to be rotationally driven via the piston 4.

Exhaust gas resulting from combustion in each cylinder is discharged to the exhaust port 12 in conjunction with opening of the exhaust valve 10. The exhaust gas from each cylinder is collected by the exhaust manifold 23. The collected air is guided to the exhaust passage 24 to drive the turbine of the turbocharger 20. The air is then discharged to the outside through the catalyst device and the muffler.

A vehicle interior is equipped with an Engine Control Unit (ECU) 31 including a non-illustrated input/output device, storage devices (ROM, RAM, BURAM, and the like) with a large number of control programs, including a nonvolatile storage device in which control programs described below are stored, a Central Processing Unit (CPU), a timer counter, and the like. These components integrally control the engine 1.

An input side of the ECU 31 connects to various sensors such as a throttle position sensor 32 detecting an opening degree θth of the throttle valve 22, an airflow sensor 33 detecting an intake amount V of the engine 1, a crank angle sensor 34 outputting a crank angle signal synchronizing with rotation of the engine 1, a water temperature sensor 35 detecting a cooling water temperature Tw of the engine 1, an accelerator sensor 36 detecting an accelerator opening degree θacc, and an atmospheric pressure sensor 37 (detection means) detecting an atmospheric pressure Pa. Detected information from the sensors is input to the ECU 31.

An output side of the ECU 31 connects to various devices such as the intake and exhaust VVT mechanism 13, 14, the injector 25, the igniter 28, and a throttle actuator 38 driving opening and closing the throttle valve 22.

The ECU 31 calculates target values for the amount of fuel injected, a fuel injection timing, a throttle opening degree, an open timing and a close timing for intake and exhaust, and the like based on detected information from the various sensors and a preset control map, and the like. Based on the target values, the ECU 31 controllably drives the various devices.

As described in Description of the Related Art, appropriate engine output is not reliably provided by the technique in Japanese Patent Laid-Open No. 2017-25770, which increases an intake and exhaust overlap amount under a low pressure environment at high altitude.

In view of such a problem, the inventors have found that a cause of prevention of the appropriate engine output at high altitude is a reduced exhaust pressure of the engine 1. That is, the low pressure environment at high altitude involves a reduced exhaust pressure of the engine 1 compared to a low pressure environment on a flat land. Thus, even if an intake manifold pressure condition at high altitude is the same as that on flat land, a differential pressure (intake manifold pressure - exhaust pressure) increases to make intake blow-by likely to occur. The inventor has concluded that an increase in overlap amount resulting from the technique in Japanese Patent Laid-Open No. 2017-25770 is a factor encouraging, on the contrary, intake blow-by, resulting in a reduced amount of air taken into the cylinders and thus reduced engine output.

Based on the above-described knowledge, the present embodiment takes measures for preventing intake blow-by under the low pressure environment at high altitude.

The ECU 31 includes target torque calculating unit 41 (first calculating means) for calculating a target torque Ttgt of the engine 1. For example, the target torque calculating unit 41 calculates the target torque Ttgt of the engine 1 based on an engine rotation speed Ne calculated from a crank angle signal from the crank angle sensor 34, the intake amount V detected by the airflow sensor 33, the accelerator opening degree θacc detected by the accelerator sensor 36, and the like.

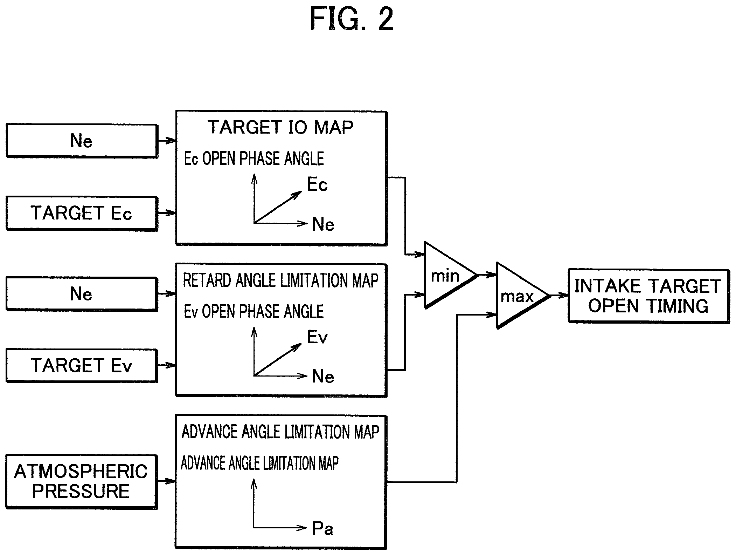

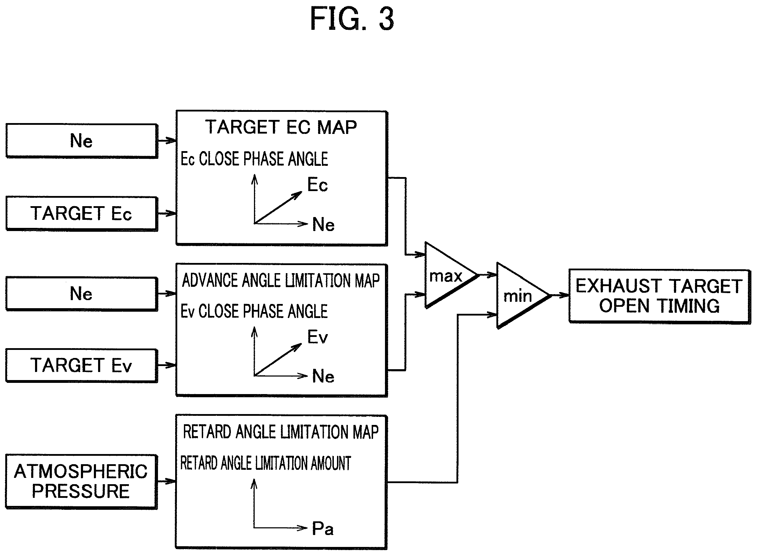

FIG. 2 is a control block diagram of the ECU 31 configured to calculate an intake open timing. FIG. 3 is a control block diagram of the ECU 31 configured to calculate an exhaust close timing.

The ECU 31 includes low-pressure-environment-compatible overlap amount calculating unit 42 (increasing means) for calculating the intake and exhaust overlap amount. The low-pressure-environment-compatible overlap amount calculating unit 42 includes a charging efficiency calculating unit 42a (first calculating unit), a volume efficiency calculating unit 42b (second calculating unit), an intake open timing setting unit 42c (first setting unit), and an exhaust close timing setting unit 42d (second setting unit).

The charging efficiency calculating unit 42a calculates a target charging efficiency Ec based on the target torque Ttgt calculated by the target torque calculating unit 41. The volume efficiency calculating unit 42b calculates a target volume efficiency Ev based on the target torque Ttgt calculated by the target torque calculating unit 41 and the atmospheric pressure Pa detected by the atmospheric pressure sensor 37.

The intake open timing setting unit 42c calculates, based on a target IO (intake open timing) map illustrated in FIG. 2, a target open timing (hereinafter referred to as an Ec target open phase angle) for the intake valve 9 from the target charging efficiency Ec calculated by the charging efficiency calculating unit 42a and the engine rotation speed Ne. The intake open timing setting unit 42c also calculates, based on a retard angle limitation map, a target open timing (hereinafter referred to as an Ev target open phase angle) for the intake valve 9 from the target volume efficiency Ev calculated by the volume efficiency calculating unit 42b and the engine rotation speed Ne. The intake open timing setting unit 42c then selects an advance angle-side (smaller) value of the Ec target open phase angle and the Ev target open phase angle to set the selected value as a target open timing for the intake valve 9.

The exhaust close timing setting unit 42d calculates, based on a target EC (exhaust close timing) map illustrated in FIG. 3, a target close timing (hereinafter referred to as an Ec target close phase angle) for the exhaust valve 10 from the target charging efficiency Ec calculated by the charging efficiency calculating unit 42a and the engine rotation speed Ne. The exhaust close timing setting unit 42d also calculates, based on an advance angle limitation map, a target close timing (hereinafter referred to as an Ev target close phase angle) for the exhaust valve 10 from the target volume efficiency Ev calculated by the volume efficiency calculating unit 42b and the engine rotation speed Ne. The exhaust close timing setting unit 42d then selects a retard angle-side (larger) value of the Ec target close phase angle and the Ev target close phase angle to set the selected value as a target close timing for the exhaust valve 10.

Therefore, the intake and exhaust overlap amount corresponds to a phase angle between the target open timing for the intake valve 9 set by the intake open timing setting unit 42c and the target close timing for the exhaust valve 10 set by the exhaust close timing setting unit 42d. The volume efficiency Ev, depending on the atmospheric pressure Pa or the like, is set as a factor for the charging efficiency Ec normalized to a standard state. Based on the retard angle limitation map, the Ev target open phase angle is calculated to be a smaller value on the advance angle side as the low pressure environment has a lower atmospheric pressure Pa. Based on the advance angle limitation map, the Ev target close phase angle is calculated to be a larger value on the retard angle side as the low pressure environment has a lower atmospheric pressure Pa. As a result, the intake and exhaust overlap amount is controllably increased with decreasing atmospheric pressure of the low pressure environment.

An increase in the overlap amount under the low pressure environment is a cause of intake blow-by. Thus, to prevent this, the ECU 31 includes increase limitation amount calculating unit 43 (second calculating means) and overlap amount increase limiting unit 44 (limiting means).

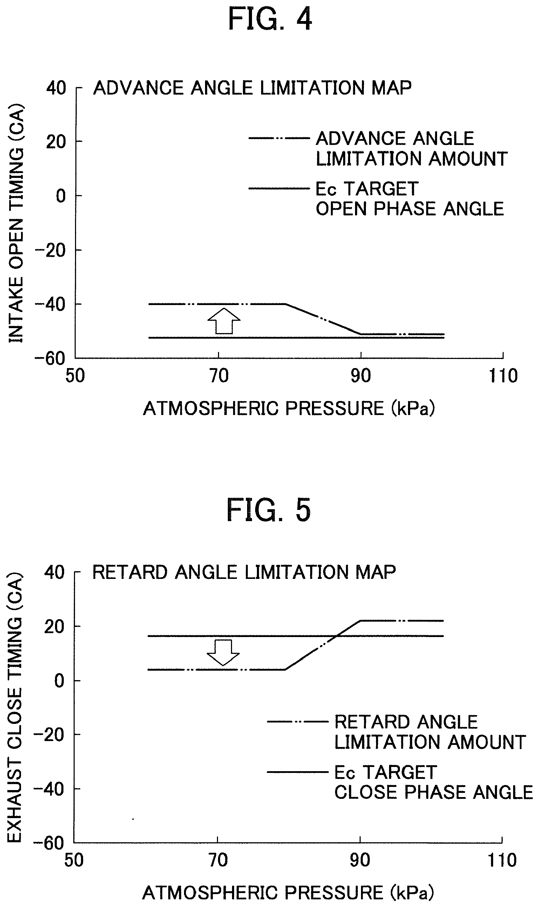

The increase limitation amount calculating unit 43 calculates an increase limitation amount used to limit an increase in the overlap amount based on the atmospheric pressure Pa. Specifically, the increase limitation amount calculating unit 43 calculates, based on an advance angle limitation amount calculation map illustrated in FIG. 4, an advance angle limitation amount for the open timing for the intake valve 9 as the increase limitation amount from the atmospheric pressure Pa detected by the atmospheric pressure sensor 37. The increase limitation amount calculating unit 43 further calculates, based on a retard angle limitation amount calculation map illustrated in FIG. 5, a retard angle limitation amount for the close timing for the exhaust valve 10 as the increase limitation amount from the atmospheric pressure Pa.

As illustrated in FIG. 2, the overlap amount increase limiting unit 44 selects a retard angle-side (larger) value of the advance angle limitation amount based on the map in FIG. 4 and the target open timing for the intake valve 9 set by the intake open timing setting unit 42c to set the selected value as a final target open timing for the intake valve 9. Furthermore, as illustrated in FIG. 3, the overlap amount increase limiting unit 44 selects an advance angle-side (smaller) value of the retard angle limitation amount based on the map in FIG. 5 and the target close timing for the exhaust valve 10 set by the exhaust close timing setting unit 42d to set the selected value as a final target close timing for the exhaust valve 10.

As illustrated in FIG. 4 and FIG. 5, a larger value on the retard angle side is calculated for an advance angle control amount and a smaller value on the advance angle side is calculated for a retard angle control amount, as the low pressure environment has a lower atmospheric pressure Pa. Thus, for a lower pressure environment, advancement of the target open timing for the intake valve 9 is limited based on the advance angle control amount and retardation of the target close timing for the exhaust valve 10 is limited based on the retard angle control amount.

The ECU 31 includes valve timing driving control unit 45 (driving control means) controllably driving the VVT mechanisms 13, 14 based on the target open timing for the intake valve 9 resulting from the limitation based on the advance angle control amount and the target close timing for the exhaust valve 10 resulting from the limitation based on the retard angle control amount. Thus, under the low pressure environment, advancement of the intake open timing and retardation of the exhaust close timing are limited to limit an increase in the intake and exhaust overlap amount.

Control of the VVT mechanism 13, 14 executed by the ECU 31 will now be described.

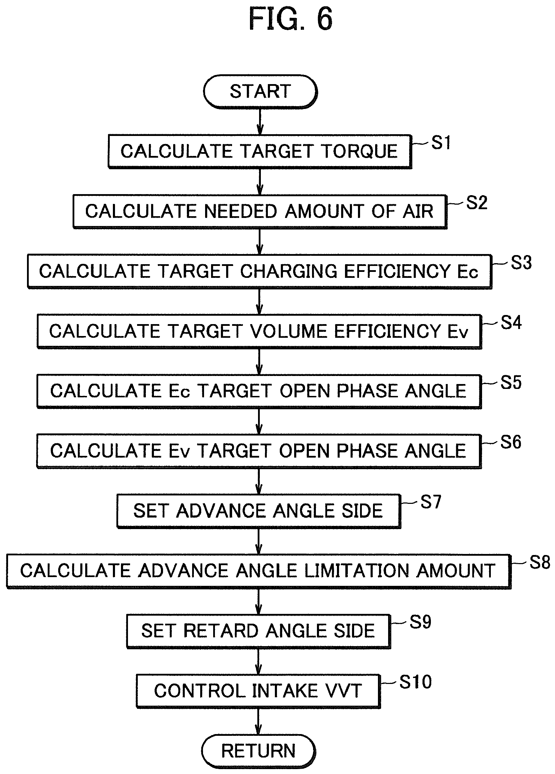

FIG. 6 is a flowchart illustrating an intake open timing control routine executed by the ECU 31. The ECU 31 executes the routine at predetermined control intervals while the engine 1 is in operation.

First, in step S1, the target torque Ttgt of the engine 1 is calculated based on the sensor information such as an accelerator opening degree θacc (first calculating means). In step S2, a needed amount of air Q needed to achieve the target torque Ttgt is calculated based on the sensor information. In subsequent step S3, the target charging efficiency Ec, needed to achieve the needed amount of air Q, is calculated (first calculating unit). In step S4, the target volume efficiency Ev is calculated based on the needed amount of air Q and the atmospheric pressure Pa (second calculating unit).

In step S5, the Ec target open phase angle is calculated from the target charging efficiency Ec and the engine rotation speed Ne. In step S6, the Ev target open phase angle is calculated from the target volume efficiency Ev and the engine rotation speed Ne. In step S7, a smaller value on the advance angle side of the Ec target open phase angle and the Ev target open phase angle is set as the target open timing for the intake valve 9 (first setting unit) .

In subsequent step S8, the advance angle control amount is calculated from the atmospheric pressure Pa based on the map in FIG. 4 (second calculating means). In step S9, a lager value on the retard angle side of the advance angle limitation amount and the target open timing for the intake valve 9 is set as the target open timing for the intake valve 9 (limiting means). In step S10, the intake side VVT mechanism 13 is controllably driven to achieve the target open timing (driving control means). The routine is subsequently ended.

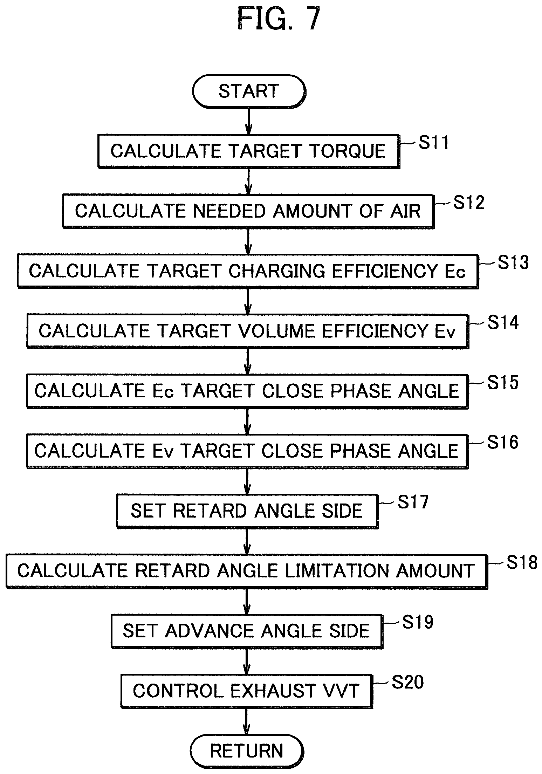

The contents of processing of the intake open timing control routine have been described above. In parallel with this, the ECU 31 executes an exhaust open timing control routine illustrated in FIG. 7. However, this routine is the same as the intake open timing control routine except that the intake side is replaced with the exhaust side. Thus, only differences will be described.

In steps S11 to S14, the same processing as that in steps 1 to 4 is executed. Subsequently, in step S15, an Ec target close phase angle is calculated. In step S16, an Ev target close phase angle is calculated. In step S17, a larger value on the retard angle side is set as the target close timing for the exhaust valve 10 (second setting unit). In step S18, a retard angle limitation amount is calculated based on the map in FIG. 5 (second calculating means). In step S19, a smaller value on the advance angle side is set as the target close timing for the exhaust valve 10 (limiting means). Subsequently in step S20, the exhaust side VTT mechanism 14 is controllably driven to achieve the target close timing (driving control means).

The above-described processing of the ECU 31 controls the intake open timing and the exhaust close timing as described below.

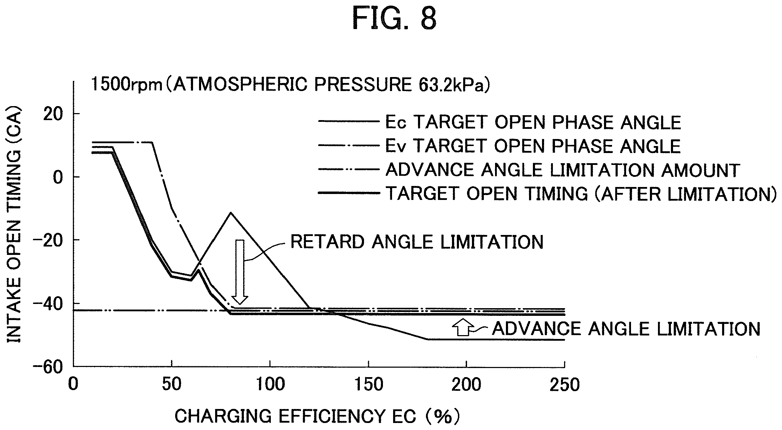

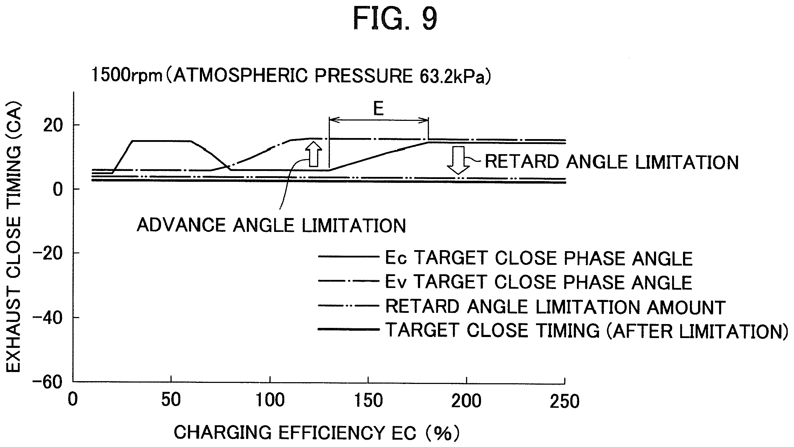

FIG. 8 is a characteristic diagram illustrating that the intake open timing is limited. FIG. 9 is a characteristic diagram illustrating that the exhaust close timing is limited. The figures illustrate characteristics in a low pressure environment (atmospheric pressure Pa = 63.2 kPa) and in a low rotation speed region (Ne = 1500 rpm).

An ordinate axis of each figure represents a crank angle. An exhaust top dead center (= 0) is defined as a reference, an advance angle side is denoted as -, and a retard angle side is denoted as +. An abscissa axis of each figure represents the charging efficiency Ec, correlated with the engine output and loads.

In FIG. 8, a thin solid line indicates the Ec target open phase angle, including the target charging efficiency Ec as a factor. An alternate long and short dash line indicates the Ev target open phase angle, including the target volume efficiency Ev as a factor. An alternate long and two short dashes line indicates the advance angle limitation amount, including the atmospheric pressure Pa as a factor. A thick line indicates the final target open timing for the intake valve 9. Similarly, in FIG. 9, a thin solid line indicates the Ec target close phase angle, including the target charging efficiency Ec as a factor. An alternate long and short dash line indicates the Ev target close phase angle, including the target volume efficiency Ev as a factor. An alternate long and two short dashes line indicates the retard angle limitation amount, including the atmospheric pressure Pa as a factor. A thick line indicates the final target close timing for the exhaust valve 10.

A general tendency is that the intake open timing and the exhaust close timing are controllably shifted in opposite directions to increase or reduce the overlap amount. For example, in a situation where the overlap is to be increased, the intake open timing is controllably shifted toward the advance angle side, while the exhaust close timing is controllably shifted toward the retard angle side. Furthermore, the advance angle limitation and the retard angle limitation are performed in opposite directions for intake and for exhaust. For example, in a situation where the intake open timing is subjected to the advance angle limitation, the exhaust close timing is subjected to the retard angle limitation.

First, characteristics of the Ec target open phase angle and the Ec target close phase angle will be described. In spite of lack of definitions, a load region of the engine 1 can be roughly classified into three ranges according to the charging efficiency Ec. The characteristics of each phase angle are set according to a purpose for each load region. In a low load region with a low charging efficiency Ec, the Ec target open phase angle is controllably shifted toward the advance angle side and the Ec target close phase angle is controllably shifted toward the retard angle side, in order to reduce a pumping loss. This enlarges the intake and exhaust overlap.

In a medium load region where the turbocharger 20 starts turbocharging, the Ec target open phase angle is controllably shifted toward the retard angle side and the Ec target close phase angle is controllably shifted toward the advance angle side, in order to prevent the engine from knocking. This reduces the overlap in the medium load region compared to the overlap in the low load region. In a high load region, high engine output is required. However, air density is low due to the low pressure environment, and a sufficient turbocharging pressure fails to be obtained in a low rotation speed region. This leads to a reduction in substantial amount of air taken into the cylinders. Thus, for the purpose of providing a sufficient amount of intake air, the Ec target open phase angle is controllably shifted toward the advance angle side and the Ec target close phase angle is controllably shifted toward the retard angle side, in order to enlarge the intake and exhaust overlap.

In a normal pressure environment on flat land, an intake close timing and the exhaust close timing are controlled without being subjected to advance angle limitation or retard angle limitation based on the above-described characteristics of the Ec target open phase angle and the Ec target close phase angle.

On the other hand, under a low pressure environment at high altitude, the Ev target open phase angle is calculated in such a manner as to limit the retardation of the Ec target open phase angle mainly in the medium load region, based on a retard angle limitation map in FIG. 2. The Ev target close phase angle is also calculated in such a manner as to limit the advancement of the Ec target close phase angle mainly in the medium load region, based on an advance angle limitation map in FIG. 3. As a result, the overlap in the medium load region is prevented from being reduced, thus increasing the overlap amount in the low pressure environment at high altitude compared to the overlap amount in a normal pressure environment on a flat land. This enables a sufficient amount of air to be taken into the cylinder, thus providing a sufficient engine output.

Furthermore, in the low pressure environment at high altitude, the advance angle limitation amount is calculated in such a manner as to limit the advancement of the Ec target open phase angle mainly in the high load region, based on the advance angle limitation map in FIG. 4. The retard angle limitation amount is also calculated in such a manner as to limit the retardation of the Ec target close phase angle mainly in the high load region, based on the retard angle limitation map in FIG. 5. This prevents enlargement of overlap in the high load region, thus reducing the overlap amount compared to the overlap amount in the normal pressure environment on a flat land.

The low pressure environment at high altitude, compared to a low pressure environment on a flat land, involves a reduced exhaust pressure of the engine 1 and is likely to undergo intake blow-by as a result of increased differential pressure (intake manifold pressure - exhaust pressure). However, a reduced overlap amount inhibits the intake blow-by. This also provides a sufficient amount of air taken into the cylinders, allowing prevention of a decrease in engine output, which may occur in the low pressure environment at high altitude.

More specifically, the load region where the Ec target open phase angle is subjected to the retard angle limitation and the advance angle limitation in FIG. 8 does not completely match the load region where the Ec target close phase angle is subjected to the advance angle limitation and the retard angle limitation in FIG. 9. Furthermore, a load region including both the advance angle limitation and the retard angle limitation (denoted by E in FIG. 9) is present between the medium load region and the high load region. Thus, for example, in the load region E, the original Ec target close phase angle does not involve significant intake blow-by, but the advance angle limitation for a sufficient amount of intake air increases the intake and exhaust overlap amount, promoting intake blow-by. Even in the load region E, the present embodiment applies the retard angle limitation to the Ec target close phase angle to limit an increase in the overlap amount. This allows intake blow-by to be inhibited to provide a sufficient amount of air taken into the cylinders.

In particular, the engine 1 of the present embodiment involves supercharging of the turbocharger 20, which raises the intake manifold pressure to increase the likelihood of intake blow-by. However, even such engine specifications allow intended advantageous effects to be produced.

The embodiment has been described. However, the aspects of the present invention are not limited to the embodiment. For example, in the above-described embodiment, the present invention is embodied in the engine 1 including the turbocharger 20. However, the present invention is not limited to this but may be applied to, for example, a naturally aspirated engine including no supercharging means.

Furthermore, in the above-described embodiment, the VVT mechanisms 13, 14 are respectively provided for intake air and exhaust air to adjust the intake and exhaust overlap amount. However, the present invention is not limited to this. For example, the VVT mechanism may be provided for one of intake air and exhaust air.

Furthermore, in the above-described embodiment, the retard angle limitation is applied to the Ec target open phase angle using the Ev target open phase angle to achieve the advance angle limitation using the advance angle limitation amount corresponding to the atmospheric pressure Pa, whereas the advance angle limitation is applied to the Ec target close phase angle using the Ev target close phase angle to achieve the retard angle limitation using the retard angle limitation amount corresponding to the atmospheric pressure Pa. However, the present invention is not limited to this.

For example, the aspects of the present invention may include performance of only one of the retard angle limitation of the Ec target open phase angle and the advance angle limitation of the Ec target close phase angle. In a case where only one of the limitations is performed, the limited side may be limited according to the atmospheric pressure Pa. Even in a case where both limitations are performed, only one side may be limited according to the atmospheric pressure Pa.

### Reference Signs List

1 Engine
9 Intake valve
10 Exhaust valve
13, 14 VVT mechanisms
20 Turbocharger
37 Atmospheric pressure sensor
41 Target torque calculating unit
42 Low-pressure-environment-compatible overlap amount calculating unit
42a Charging efficiency calculating unit
42b Volume efficiency calculating unit
42c Intake open timing setting unit
42d Exhaust close timing setting unit
43 Increase limitation amount calculating unit
44 Overlap amount increase limiting unit
45 Valve timing driving control unit

## Claims

1. A control device for an engine including a variable valve timing mechanism capable of changing an open and close timing for at least one of an intake valve and an exhaust valve to adjust an intake and exhaust overlap amount, the control device comprising:
detecting means for detecting an atmospheric pressure;
first calculating means for calculating a target torque of the engine;
increasing means for calculating the intake and exhaust overlap amount based on the target torque calculated by the first calculating means and increasing the overlap amount under a low pressure environment compared to the overlap amount under a normal pressure environment based on the atmospheric pressure detected by the detecting means;
second calculating means for calculating an increase limitation amount for limiting an increase in the overlap amount under the low pressure environment based on the atmospheric pressure detected by the detecting means;
limiting means for limiting an increase in the overlap amount increased by the increasing means, based on the increase limitation amount calculated by the second calculating means; and
driving control means for controllably driving the variable valve timing mechanism to achieve the overlap amount resulting from the limitation by the limiting means.

2. The control device for the engine according to claim 1, wherein
the variable valve timing mechanism is capable of changing an open timing for the intake valve,
the second calculating means calculates, as the increase limitation amount, an advance angle limitation amount for the open timing for the intake valve such that the open timing is retarded as the atmospheric pressure detected by the detecting means decreases, and
the limiting means limits advancement of the open timing for the intake valve based on the advance angle limitation amount calculated by the second calculating means.

3. The control device for the engine according to claim 1 or 2, wherein
the variable valve timing mechanism is capable of changing a close timing for the exhaust valve,
the second calculating means calculates, as the increase limitation amount, a retard angle limitation amount for the close timing for the exhaust valve such that the close timing is advanced as the atmospheric pressure detected by the detecting means decreases, and
the limiting means limits retardation of the close timing for the exhaust valve based on the retard angle limitation amount calculated by the second calculating means.

4. The control device for the engine according to claim 2, wherein
the increasing means includes:
a first calculating unit calculating a charging efficiency from the target torque calculated by the target torque calculating means;
a second calculating unit calculating a volume efficiency from the charging efficiency and the atmospheric pressure detected by the detecting means; and
a first setting unit setting one of the open timing for the intake valve based on the charging efficiency calculated by the first calculating unit and the open timing for the intake valve based on the volume efficiency calculated by the second calculating unit, as the open timing for the intake valve for which the advance angle is limited based on the advance angle limitation amount.

5. The control device for the engine according to claim 3, wherein
the increasing means includes:
a first calculating unit calculating a charging efficiency from the target torque calculated by the target torque calculating means;
a second calculating unit calculating a volume efficiency from the charging efficiency and the atmospheric pressure detected by the detecting means; and
a second setting unit setting one of the close timing for the exhaust valve based on the charging efficiency calculated by the first calculating unit and the close timing for the exhaust valve based on the volume efficiency calculated by the second calculating unit, as the close timing for the exhaust valve for which the retard angle is limited based on the retard angle limitation amount.

6. The control device for the engine according to claims 1 to 5, wherein
the engine includes supercharging means.
